# EUROPEAN PATENT SPECIFICATION

(11) **EP 1 379 469 B1**
(45) Date of publication and mention of the grant of the patent: **01.03.2006**
(21) Application number: 02740486.2
(22) Date of filing: 18.04.2002
(51) Int. Cl.: C01F 11/18, C01B 33/12, C04B 14/02, C04B 26/26, C04B 2/10, C08L 95/00

(54) **PROCESS FOR MINERAL CARBONATION WITH CARBON DIOXIDE**
VERFAHREN ZUR KARBONISIERUNG VON MINERALIEN MIT KOHLENSTOFFDIOXID
PROCEDE DE CARBONATATION MINERALE AU MOYEN DE DIOXYDE DE CARBONE

(30) Priority: 20.04.2001 EP 01303659
(43) Date of publication of application: 14.01.2004
(73) Proprietor: SHELL INTERNATIONALE RESEARCH MAATSCHAPPIJ B.V., 2596 HR Den Haag (NL)
(72) Inventor: GEERLINGS, Jacobus, Johannes, Cornelis, NL-1031 CM Amsterdam (NL); MESTERS, Carolus, Matthias, Anna, Maria, NL-1031 CM Amsterdam (NL); OOSTERBEEK, Heiko, NL-1031 CM Amsterdam (NL)
(86) International application number: PCT/EP2002/004336
(87) International publication number: WO 2002/085788

(56) References cited:
- WO-A-00/46149
- WO-A-00/46164
- US-A- 1 697 722
- US-A- 4 230 765
- DATABASE WPI Section Ch, Week 197651 Derwent Publications Ltd., London, GB; Class L02, AN 1976-94982X XP002177996 & JP 51 125414 A (OSAKA PACKING SEIZOSHO KK), 1 November 1976 (1976-11-01)
- "Mineral Carbonation Study Program" date: 07/2000 [Online] Retrieval from Internet http://www.fetc.doe.gov/publications/ factsheets/program/prog006.pdf Retrieval date: 20.9.2001 XP002177995 cited in the application

## Description

The present invention relates to a process for mineral carbonation with carbon dioxide.

The rising of the carbon dioxide concentration in the atmosphere due to the increased use of energy derived from fossil fuels potentially has a large impact on climate change. Measures to reduce the atmospheric carbon dioxide concentration are therefore needed.

In nature, stable mineral carbonate minerals and silica are formed by a reaction of carbon dioxide with natural silicate minerals:

(Mg,Ca)ₓSi_{y}O_{x+2y} + xCO₂ ⇒ x (Mg,Ca)CO₃ + ySiO₂

The reaction in nature, however, proceeds at very low reaction rates.

Recently, the feasibility of such a reaction in process plants has been studied. These studies mainly aim at increasing the reaction rate.

At the internet site of the US department of energy, http://www.fetc.doe.gov/publications/factsheets/program/prog006.pdf, for example, is disclosed the reaction of finely ground serpentine (Mg₃Si₂O₅(OH)₄) or olivine (Mg₂SiO₄) in a solution of supercritical carbon dioxide and water to form magnesium carbonate. Under conditions of high temperature and pressure, 84% conversion of olivine has been achieved in 6 hours and a 80% conversion of pre-heated serpentine in less than an hour.

Other studies focus on the process of molten salt carbonation of mineral silicates with molten MgCl₂. This process is described by Walters et al. at the internet site hppt:\\www.netl.doe.gov/products/gcc/indepth/mirieral/minarb.html, and comprises the formation of magnesium hydroxide from magnesium silicates, via the formation of MgCl₂ using concentrated hydrochloric acid followed by hydrolysis of MgCl₂. Magnesium hydroxide is then carbonated in a direct gas solid reaction with carbon dioxide.

The above-mentioned processes, however, involve either the use of supercritical carbon dioxide or of concentrated hydrochloric acid. There is a need in the art for a rapid mineral carbonation process without the need of the use of supercritical conditions or of harmful or corrosive chemicals such as hydrochloric acid.

It has now been found that it is possible to react carbon dioxide with mineral silicates at an acceptable reaction rate if the reaction is performed with silicates that are immersed in an aqueous electrolyte solution.

Accordingly, the present invention relates to a process for mineral carbonation with carbon dioxide wherein carbon dioxide is reacted with a bivalent alkaline earth metal silicate, selected from the group of ortho-, di-, ring, and chain silicates, which silicate is immersed in an aqueous electrolyte solution.

In the process according to the invention, carbon dioxide is brought into contact with an aqueous electrolyte solution wherein the silicate is immersed. It will be appreciated that under such conditions, part of the carbon dioxide will dissolve in the aqueous solution and part will be present in the form of HCO₃⁻ or CO₃²⁻ ions.

Carbon dioxide may be brought into contact with the aqueous electrolyte solution wherein the silicate is immersed in any reactor suitable for gas-solid reactions in the presence of a liquid. Such reactors are known in the art. Examples of suitable reactors are a slurry bubble column or an extruder.

The ratio of mineral silicate to aqueous electrolyte solution depends inter alia on the type of reactor used, the particle size of the silica and process conditions like temperature and pressure.

In order to achieve a high reaction rate, it is preferred that the carbon dioxide concentration is high, which can be achieved by applying an elevated carbon dioxide pressure. Suitable carbon dioxide pressures are in the range of from 0.05 to 100 bar (absolute), preferably in the range of from 0.1 to 50 bar (absolute).

The total process pressure is preferably in the range of from 1 to 150 bar (absolute), more preferably of from 1 to 75 bar (absolute).

It is preferred that the silicate immersed in the electrolyte solution is in the form of small particles in order to achieve a high reaction rate. Particles having an average diameter of at most 5 mm may suitably be used. Preferably, the average diameter is at most 1 mm, more preferably at most 0.2 mm. Preferably, the average diameter is not smaller than 10 µm in order to avoid a very high energy input needed for particle size reduction.

Reference herein to the average diameter is to the volume medium diameter D(v,0.5), meaning that 50 volume% of the particles have an equivalent spherical diameter that is smaller than the average diameter and 50 volume% of the particles have an equivalent spherical diameter that is greater than the average diameter. The equivalent spherical diameter is the diameter calculated from volume determinations, e.g. by laser diffraction measurements.

It has been found that the reaction rate can be further increased when the silicate particles are reduced in size during the process. This can be achieved by a process wherein the particles are mechanically broken up into smaller particles, for example by an extrusion, kneading or wet-milling process.

Alternatively, the process according to the invention may be carried out by injecting carbon dioxide together with an aqueous electrolyte solution into underground layers that contain mineral silicates.

Suitable silicates for the process according to the invention are ortho-, di-, ring, and chain silicates.

Silicates are composed of orthosilicate monomers, i.e. the orthosilicate ion SiO₄⁴⁻ which has a tetrahedral structure. Orthosilicate monomers form oligomers by means of O-Si-O bonds at the polygon corners. The Q^{S} notation refers to the connectivity of the silicon atoms. The value of superscript s defines the number of nearest neighbour silicon atoms to a given Si.

Orthosilicates, also referred to as nesosilicates, are silicates which are composed of distinct orthosilicate tetrathedra that are not bonded to each other by means of O-Si-O bonds (Q⁰ structure). An example of an orthosilicate is forsterite. Disilicates, also referred to as sorosilicates, have two orthosilicate tetrathedra linked to each other (Si₂O₇⁶⁻ as unit structure, i.e. a Q¹Q¹ structure). Ring silicates, also referred to as cyclosilicates, typically have SiO₃²⁻ as unit structure, i.e. a (Q²)ₙ structure. Chain silicates, also referred to as inosilicates, might be single chain (SiO₃²⁻ as unit structure, i.e. a (Q²)ₙ structure) or double chain silicates ((Q³Q²)ₙ structure).

Phyllosilicates, which are silicates having a sheet structure (Q³)ₙ, and tectosilicates, which have a framework structure (Q⁴)ₙ, are not suitable for the process according to the invention.

The silicates suitable for the process of the present invention are bivalent alkaline earth metal silicates, preferably calcium and/or magnesium silicates. Other metal ions, such as iron, aluminium, or manganese ions, may be present besides the bivalent alkaline earth metal ions. Especially in naturally-occurring silicates, both bivalent alkaline earth metal ions and other metal ions are present. An example is olivine which contains bivalent iron ions and magnesium ions. Examples of calcium and/or magnesium silicates suitable for the process according to the invention are forsterite, olivine, monticellite, wollastonite, diopside, and enstatite.

The aqueous electrolyte solution in which the silicate is immersed is preferably a solution of a salt that has a solubility in water of at least 0.01 moles per litre at 298K and 1 atmosphere, preferably at least 0.1 moles per litre. Preferred salts are sodium, potassium or barium salts, more preferably chlorides or nitrates of sodium, potassium or barium salts, i.e. NaCl, KCl, BaCl₂, NaNO₃, KNO₃, or Ba(NO₃)₂, even more preferably sodium nitrate.

The electrolyte solution suitably has an electrolyte concentration of at least 0.01 moles/litres, preferably in the range of from 0.1 to 2 moles per litre.

The process according to the invention is preferably performed at elevated temperature. It will be appreciated that the maximum temperature is determined by thermodynamic considerations. If calcium silicate is used, suitable temperatures are typically in the range of from 20 to 400 °C, preferably in the range of from 80 to 300 °C, more preferably of from 100 to 200 °C. If magnesium silicate is used, suitable temperatures are typically in the range of from 20 to 250 °C, preferably of from 100 to 200 °C.

The process according to the invention can suitably be used to remove carbon dioxide from natural gas. Thus, in a specific embodiment of the invention, carbon dioxide-containing natural gas is contacted with an aqueous electrolyte solution wherein silicate is immersed. If the natural gas is already available at elevated pressure, there is no need to depressurise the gas before reacting it with silicate.

The mixture of carbonate and silica formed by the process of the invention can be disposed of, for example by refilling mining pits. It is, however, advantageous to form products from it having a commercial value.

The mixture of carbonate and silica formed may be used in construction materials. Examples of construction materials that can be produced from such a mixture are solid construction elements like building blocks, paving stones and roofing tiles composed of solid mineral particles and a binder as described in WO 00/46164. Such materials typically comprise from 70 to 99% by weight of solid particles and from 1 to 30% by weight of binder. These materials are typically manufactured by mixing the solid particles with the molten binder and allowing the mixture to solidify. Suitable binders are commercially available. Hydrocarbonaceous binders such as described in WO 00/46164 are particularly suitable.

The carbonate formed may be used for the manufacture of calcium oxide. It is well-known to produce calcium oxide from carbonates. A disadvantage, however, of the manufacture of calcium oxide from carboriates obtained by mining is that the overall process is carbon dioxide producing. By using the carbonate formed in the carbonation process as hereinbefore described, the overall process is a carbon dioxide neutral process with respect to the stoichiometry of the reactions involved. In the manufacture of calcium oxide according to the invention, the carbonate may be used as a mixture with silica.

If carbonate and/or silica is separately desired, the products of the carbonation process of the invention can be separated by technologies known in the art, for example by density separation such as sink-flotation.

The process of the invention will be illustrated by means of the following examples.

### EXAMPLE 1

### Experiment 1 (according to the invention)

Wollastonite (CaSiO₃) powder having an average diameter (D(v, 0.5)) of 61 µm as measured by laser diffraction, was immersed in a solution of NaCl (0.04 g/ml) in water. The wollastonite concentration was 0.077 g/ml. The thus-obtained wollastonite slurry was brought, in a stirred autoclave, to a temperature of 180 °C and a pressure of 40 bar g. Carbon dioxide in an amount such that the pressure remained constant was continuously fed to the autoclave. Conversion was determined after one hour and after 3 hours reaction time by taking a sample of the slurry and measuring the weight loss after heating the dry reaction product at 900 °C and comparing the weight loss to the theoretic maximum loss that would be achieved at 100% conversion.

### Experiment 2 (comparative)

An experiment similar to experiment 1 was performed, but without NaCl in the wollastonite slurry.

### EXAMPLE 2

### Experiment 3 (according to the invention)

A slurry of 5 grams of fine wollastonite powder, having an average diameter (D(v, 0.5)) of 13 µm as measured by laser diffraction, in 50 ml of an aqueous NaCl solution (0.06 g/ml) was loaded into a glass flask. The slurry was brought to a temperature of 100 °C at ambient pressure. A mixture of nitrogen and carbon dioxide (50/50 v/v) was bubbled through the slurry at a rate of 12 ml per minute. After 16 hours reaction time, the conversion was determined as described in experiment 1.

### Experiment 4 (comparative)

An experiment similar to experiment 3 was performed, but without NaCl in the wollastonite slurry.

The results of the conversion measurements in experiments 1 to 4 are shown in the Table below.

**TABLE**

| | NaCl conc. (moles/litre) | Conversion (%) | | |
|---|---|---|---|---|
| | | 1h | 3h | 16h |
| Experiment 1 | 0.68 | 62 | 76 | |
| Experiment 2 | - | 46 | 53 | |
| Experiment 3 | 1.0 | | | 52 |
| Experiment 4 | - | | | 22 |

## Claims

1. A process for mineral carbonation with carbon dioxide wherein carbon dioxide is reacted with a bivalent alkaline earth metal silicate, selected from the group of ortho-, di-, ring, and chain silicates, which silicate is immersed in an aqueous electrolyte solution, wherein the concentration of electrolyte in the electrolyte solution is at least 0.01 moles per litre.

2. A process according to claim 1, wherein silicates particles are dispersed in the aqueous electrolyte solution.

3. A process according to claim 2, wherein the silicate particles have an average diameter of at most 5 mm, preferably at most 1 mm, more preferably at most 0.2 mm.

4. A process according to claim 2 or 3, wherein the silicate particles are mechanically treated such that their size is reduced during the process.

5. A process according to claim 4, which is an extrusion process.

6. A process according to any one of the preceding claims, wherein the electrolyte is a salt having a solubility in water of at least 0.01 moles per litre, preferably at least 0.1 moles per litre.

7. A process according to claim 6, wherein the electrolyte is a sodium, potassium or barium salt, more a chloride or nitrate of sodium, potassium or barium, even more preferably sodium nitrate.

8. A process according to any one of the preceding claims, wherein the concentration of electrolyte in the electrolyte solution is in the range of from 0.1 to 2 moles per litre.

9. A process according to any one of the preceding claims, wherein the bivalent alkaline earth metal silicate is a magnesium or calcium silicate.

10. A process according to claim 9, wherein the silicate is a calcium silicate and the operating temperature is in the range of from 20 to 900 °C, preferably of from 80 to 300 °C, more preferably of from 100 to 200 °C.

11. A process according to claim 9, wherein the silicate is a magnesium silicate and the operating temperature is in the range of from 20 to 250 °C, preferably of from 100 to 200 °C.

12. A process according to any one of the preceding claims, wherein the operating pressure is in the range of from 1 to 150 bar (absolute), preferably of from 1 to 75 bar (absolute).

13. A process according to any one of claims 1 to 12 further comprising mixing the mixture of silica and carbonate formed with a molten binder and solidifying the silica/carbonate/binder mixture.

14. A process according to claim 13 wherein the binder is a hydrocarbonaceous binder.

## Patentansprüche

1. Verfahren zur Mineral-Carbonatumwandlung mit Kohlendioxid, worin Kohlendioxid mit einem zweiwertigen Erdalkalimetallsilikat, ausgewählt aus der Gruppe der Ortho-, Di-, Ring- und Kettensilikate, umgesetzt wird, welches Silikat in eine wässerige Elektrolytlösung eingetaucht ist, wobei die Elektrolytkonzentration in der Elektrolytlösung wenigstens 0,01 Mol pro Liter beträgt.

2. Verfahren nach Anspruch 1, worin Silikatteilchen in der wässerigen Elektrolytlösung dispergiert werden.

3. Verfahren nach Anspruch 2, worin die Silikatteilchen einen mittleren Durchmesser von höchstens 5 mm, vorzugsweise höchstens 1 mm, stärker bevorzugt höchstens 0,2 mm aufweisen.

4. Verfahren nach Anspruch 2 oder 3, worin die Silikatteilchen derart mechanisch behandelt werden, dass ihre Größe während des Verfahrens verringert wird.

5. Verfahren nach Anspruch 4, bei dem es sich um ein Extrusionsverfahren handelt.

6. Verfahren nach einem der vorstehenden Ansprüche, worin der Elektrolyt ein Salz mit einer Löslichkeit in Wasser von wenigstens 0,01 Mol pro Liter, vorzugsweise wenigstens 0,1 Mol pro Liter ist.

7. Verfahren nach Anspruch 6, worin der Elektrolyt ein Natrium-, Kalium- oder Bariumsalz ist, stärker bevorzugt ein Chlorid oder Nitrat von Natrium, Kalium oder Barium, noch stärker bevorzugt Natriumnitrat.

8. Verfahren nach einem der vorstehenden Ansprüche, worin die Elektrolytkonzentration in der Elektrolytlösung im Bereich von 0,1 bis 2 Mol pro Liter liegt.

9. Verfahren nach einem der vorstehenden Ansprüche, worin das zweiwertige Erdalkalimetallsilikat ein Magnesium- oder Calciumsilikat ist.

10. Verfahren nach Anspruch 9, worin das Silikat ein Calciumsilikat ist und die Arbeitstemperatur im Bereich von 20 bis 400 °C, vorzugsweise von 80 bis 300 °C, stärker bevorzugt von 100 bis 200 °C liegt.

11. Verfahren nach Anspruch 9, worin das Silikat ein Magnesiumsilikat ist und die Betriebstemperatur im Bereich von 20 bis 250 °C, vorzugsweise von 100 bis 200 °C liegt.

12. Verfahren nach einem der vorstehenden Ansprüche, worin der Arbeitsdruck im Bereich von 1 bis 150 bar (absolut), vorzugsweise von 1 bis 75 bar (absolut), liegt.

13. Verfahren nach einem der Ansprüche 1 bis 12, das weiterhin ein Mischen des gebildeten Gemisches aus Siliciumoxid und Carbonat mit einem geschmolzenen Bindemittel und ein Verfestigen des Siliciumoxid/Carbonat/Bindemittel-Gemisches umfasst.

14. Verfahren nach Anspruch 13, worin das Bindemittel ein kohlenwasserstoffhältiges Bindemittel ist.

## Revendications

1. Un procédé pour la carbonatation minérale avec du dioxyde de carbone, ce dernier réagissant avec des silicates de métaux alcalino-terreux bivalents, choisis parmi le groupe composé d'orthosilicates, de disilicates, de silicates en forme d'anneaux et de silicates en forme de chaîne, le silicate étant immergé dans une solution d'électrolyte aqueuse, dont la concentration en électrolyte est d'au moins 0,01 mole par litre.

2. Un procédé suivant la revendication 1, **caractérisé en ce que** les particules de silicates sont dispersées dans la solution électrolyte aqueuse.

3. Un procédé suivant la revendication 2, **caractérisé en ce que** les particules de silicate ont un diamètre moyen de 5 mm au maximum, de préférence d'1 mm au maximum, mieux encore de 0,2 mm au maximum.

4. Un procédé suivant les revendications 2 et 3, **caractérisé en ce que** les particules de silicate sont traitées mécaniquement afin que leur taille soit réduite pendant le procédé.

5. Un procédé suivant la revendication 4, qui est un processus d'extrusion.

6. Un procédé suivant une quelconque des revendications précédentes, **caractérisé en ce que** l'électrolyte est un sel dont la solubilité dans l'eau est d'au moins 0,01 mole par litre, de préférence d'au moins 0,1 mole par litre.

7. Un procédé suivant la revendication 6, **caractérisé en ce que** l'électrolyte est de préférence un sel de sodium, de potassium ou de baryum, mieux encore un chlorure ou un nitrate de sodium, de potassium ou de baryum et idéalement un nitrate de sodium.

8. Un procédé suivant une quelconque des revendications précédentes, **caractérisé en ce que** la concentration d'électrolyte dans la solution d'électrolyte est située dans la fourchette comprise entre 0,1 et 2 moles par litre.

9. Un procédé suivant une quelconque des revendications précédentes, **caractérisé en ce que** le silicate de métal alcalino-terreux bivalent est un silicate de magnésium ou de calcium.

10. Un procédé suivant la revendication 9, **caractérisé en ce que** le silicate est un silicate de calcium et la température de service est située dans la fourchette comprise entre 20 et 400°C, de préférence entre 80 et 300°C, mieux encore entre 100 et 200°C.

11. Un procédé suivant la revendication 9, **caractérisé en ce que** le silicate est un silicate de magnésium et la température de service est située dans la fourchette comprise entre 20 et 250°C, de préférence entre 100 et 200°C.

12. Un procédé suivant une quelconque des revendications précédentes, **caractérisé en ce que** la pression de service est située entre 1 et 150 bars (valeur absolue), de préférence entre 1 et 75 bars (valeur absolue).

13. Un procédé suivant une quelconque des revendications entre 1 et 12 prévoyant la mixture du mélange de carbonate et de silice avec un liant en fusion et de solidifier le mélange silice/carbonate/liant.

14. Un procédé suivant la revendication 13, **caractérisé en ce que** le liant est un liant hydrocarboné.
